# EUROPEAN PATENT SPECIFICATION

(11) **EP 1 532 768 B1**
(45) Date of publication and mention of the grant of the patent: **17.09.2008**
(21) Application number: 03764230.3
(22) Date of filing: 09.07.2003
(51) Int. Cl.: H04L 12/00, H04Q 9/00

(54) **A REMOTE CONTROL SYSTEM OF A HOME NETWORK**
FERNSTEUERUNGSSYSTEM EINES HAUSNETZES
SYSTEME DE COMMANDE A DISTANCE D'UN RESEAU DOMESTIQUE

(30) Priority: 10.07.2002 KR 2002040039
(43) Date of publication of application: 25.05.2005
(73) Proprietor: LG ELECTRONICS INC., Seoul 150-010 (KR)
(72) Inventor: AHN, Sung-Joon, Yongin, Gyunggi-Do 449-511 (KR); MIN, Ku-Bong, Seoul 156-830 (KR); KANG, Min-Seok, Yongsan-Gu, Seoul 140-031 (KR)
(74) Representative: Heinze, Ekkehard
(86) International application number: PCT/KR2003/001361
(87) International publication number: WO 2004/008686

(56) References cited:
- WO-A-02/05118
- WO-A1-02/23902
- KR-A- 20020 026 745
- KR-A- 20020 064 847
- US-A1- 2002 029 256
- "Universal Plug and Play Device Architecture, UPnP, Version 1.0" UNIVERSAL PLUG AND PLAY, 8 June 2000 (2000-06-08), XP002210614

## Description

### TECHNICAL FIELD

The present invention relates to a home network, and in particular to a remote control system of a home network using UPnP (universal plug and play).

### BACKGROUND ART

The document WO 02/05118 A discloses a remote control system of a home network comprising a local home network in which a plurality of devices are connected. Further, at least one remote terminal is provided in order to control the local network in a remote place by means of at least one user command sent from the at least one remote terminal. In this prior art a remote control system is taken into account which is suitable and adapted to monitor the state of the devices connected to the home network and to control the devices by using a remote terminal in a remote place. For this purpose, a central portal server is provided in order to control the plurality of devices in accordance with at least one user command sent from the at least one remote terminal. The central portal server is adapted to convert the at least one user command into a message of a protocol which is suitable for controlling the plurality of devices.

The document US 2002/0029256 A1 discloses a remote control system of a home network of a similar type as document WO 02/05118 A.

With the development of Internet and digital technologies, researches on a home network field connecting PCs, network devices, AV devices, electric home appliances and home automation devices, etc. in a house have been actively performed.
UPnP (universal plug and play) is one of influential industrial standards on a home network field, and many companies all over the world consist of a UPnP forum.

In general, a UPnP network system consists of plural devices providing a network service and a CP (control point) for controlling the plural devices. Herein, the CP is for controlling various devices, and the device can be a PC contacted to a home network and network devices, etc. Through the CP, a user discoveries various devices, finds out their description and controls them.

On the other hand, the device transmits an event to the CP and provides a presentation page to the CP, and accordingly it is possible to control and grasp a state of the device by using a web page.

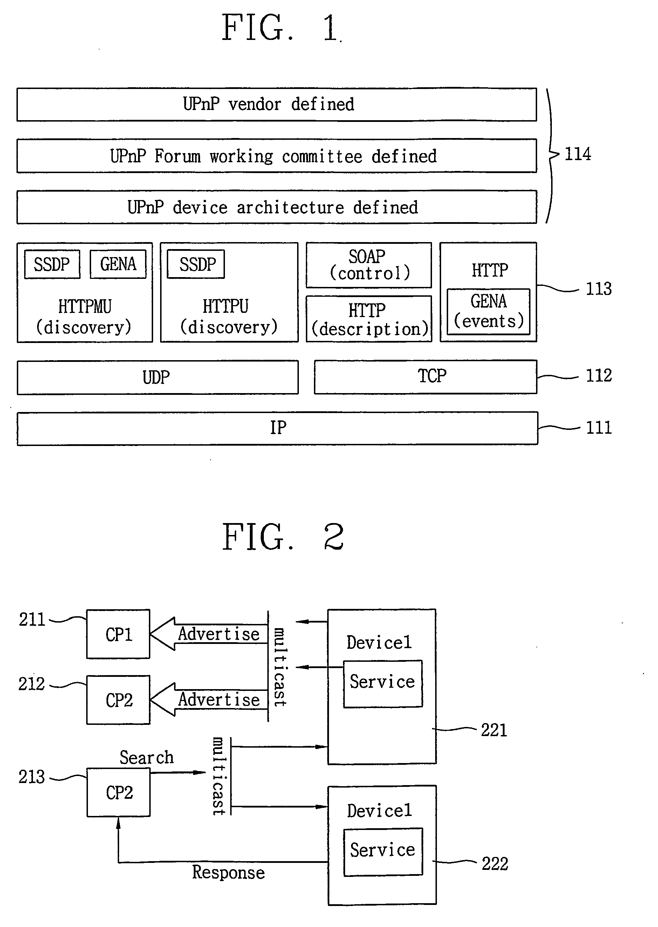

First, a UPnP protocol structure of a general UPnP architecture version 1.0 will be described with reference to accompanying Figure 1.

Figure 1 is an exemplary view illustrating a structure of a UPnP protocol. As depicted in Figure 1, the UPnP protocol includes a network layer 111; a transport layer 112 having a UDP and a TCP; a presentation/session layer 113 having a protocol such as HTTP, XML (extensible markup language), SOAP (simple object access protocol) and SSDP (simple service discovery protocol), etc. and an architecture such as GENA (generic event notification architecture); and an application layer 114 having information related to a UPnP device, a ForumP and a provider, etc.

In a UPnP network system using the UPnP protocol, communication between the CP and the device is performed by passing an addressing step for allocating an IP address to the device; a discovery step for making the CP discover existence of the device; a description step for making the CP obtain service information supported by the device; a control step for calling a service of the device by the CP; an event step for notifying the CP of the device's state variation; and a presentation step for presenting a state of the device and control information.

Among those steps, the discovery step for discovering existence of the device will be described in detail with reference to Figure 2.

Figure 2 is a state diagram illustrating the discovery step. As depicted in Figure 2, a device 221 performs multicasting of CPs 211, 212, a CP 213 transmits a search message to devices 221, 222, and the device 222 responds.

First, in order to discover the device, the CP performs the device discovery step by using the SSDP (simple service discovery protocol). Accordingly, when the device 221 contacts to the UPnP network, it performs multicasting of an advertisement message, and accordingly the CPs 211, 212 confirms existence of the device through a multicast message from the device 221.

And, when the CP contacts to the UPnP network, the CP 213 multicasts a search message, the device 222 receives the search message and transmits information thereof to the CP 113 by unicast. Herein, the CP uses the SOAP (simple object access protocol) in order to control the device contacted to the UPnP network, and the CP uses the GENA (generic event notification architecture) in order to receive the state event of the device.

However, in the present UPnP device architecture version 1.0, it is assumed there are all construction parts of the home network in a local network, contact service in a remote place is not considered particularly. Because of that, when there is a contact service request from a remote place, it may not be supported. In more detail, UPnP message translation for a case having constraint due to a bandwidth or a processing performance of a remote terminal has to be performed variously according to service types. However, a plan how to perform mutual operation between comparatively complicated device and a CP by a simple user command and event has not been presented.

In addition, in order to provide a home network service to various remote terminals, input/output to the remote terminal has to be separated from service contents, however a plan for performing it efficiently has not been suggested. For example, in case of a service using XML (extensible markup language), XML pages are generated regardless of kinds of a terminal, and only terminal display format is varied.

In the conventional art, in a home network using not the UPnP home network but another standard, access from a remote place to the home network can be implemented, however there are following problems.

First, because a user has to log in a provider's network, it may be a burden to the provider in the scalability aspect. In more detail, because server has to be increased according to increase of the number of users, disutility may be caused, processing time delay may occur by passing a relay server, and the user may have unpleasantness because of providing user's personal information to the provider.

In addition, when plural users access simultaneously, collision may occur in the home network and devices, and accordingly it may cause the users inconvenience because there is no clear collision solution.

### TECHNICAL GIST OF THE PESENT INVENTION

In order to solve the above-described problems, it is an object of the present invention to provide a remote control system of a home network capable of monitoring a state of devices connected to a home network and controlling the devices by using various terminals in a remote place.

In addition, in local home network techniques, it is another object of the present invention to provide a remote control system of a home network capable of controlling devices in a home network by contacting to the home network from a remote place by using a mobile terminal or a personal computer, etc. using a web browser.

In order to achieve the above-mentioned objects, a remote control system of a home network in accordance with claim 1 is provided. Further developments of the inventive system are defined in the sub-claims.

The remote control system of a home network according to the present invention includes a local home network in which plural devices are connected; a remote terminal for controlling the local home network in a remote place ; and a remote access server having a function as a local CP (control point) and transmitting/receiving request/answer to/from the remote terminal.

The remote access server is included in a local home network or an Internet provider server or can be constructed so as to have functions divided into a local home network and a provider server.

A remote control system of a home network includes a device control processing unit operated as a CP (control point) for mutual operation with plural devices and controlling the devices according to a service request from a remote terminal ; a remote access service unit for notifying the device control processing unit of the service request from the remote terminal; and a remote terminal service unit for converting the user request from the remote terminal into a service request, transmitting it to the remote access service unit and transmitting a response from the remote access service unit to a pertinent terminal.

Accordingly, when a web service request of a remote terminal is transmitted from a remote access service unit, the device control processing unit converts it into at least one UPnP message change. When it can be processed with reference to a home network view of a pertinent local CP corresponded to the remote terminal, the device control processing unit does not perform UPnP message change. When it is required to respond to a UPnP message from the device, the device control processing unit transmits a notification request to the remote access service unit.

The remote control system of the home network includes a remote access service unit for receiving a user's web request from a remote terminal service unit; transmitting it to a device control processing unit by converting it into a corresponded service request according to contents of the web request; and transmitting a web response for a pertinent remote terminal to the remote terminal service unit by having a service view consisting of a set of at least one web document.

The remote access service unit includes a profile database, determines a service view of a remote access service according to service related information recorded in a profile database and provides various remote access services to a user and a remote terminal with reference to the service view.

The profile database includes information such as user's preferred device list, request event list, performance of the remote access terminal such as a screen size and a kind of an input device, provider network bandwidth and providable service, user access priority list by devices. Herein, a service view of the remote access service is determined according to service related information recorded in the profile database, and accordingly various remote access services can be provided.

The remote control system of a home network includes a remote terminal service unit for performing mutual communication as web request/response with a remote terminal by having a built-in web server; transmitting a web request from a user to a remote access service unit and transmitting a web response as a web document form generated with reference to a recent service view from the remote access service unit to a remote terminal.

And, the remote control system of claim 17 further includes a setup module for initializing the device control processing unit and the profile database of the remote access service unit; and a communication module having asynchronous notification functions such as e-mail, voice telephone and SMS, etc.

In addition, the remote access server is constructed to provide services to plural remote terminals by having a method for relaying a local CP of the device control processing unit with a remote terminal and a plural terminals simultaneous access method for the remote access service unit.

In the method for relaying a local CP of the device control processing unit with a remote terminal, there are a method for having each local CP for each remote terminal, a method for having one local CP in the device control processing unit and a method for having a local CP by devices kinds.

Because a home network view exists by terminals, the method for having a CP by terminals is simple and easy to implement.

In the method for having one local CP in the device control processing unit, because a single home network view is used, there is a process for extracting information for each remote terminal. In that case, plural remote terminals co-own (share) service requests, and one service result can be transmitted to the plural terminals.

In the method for having a local CP by device kinds, it is possible to simplify each local CP, however a process for extracting information for each service from the home network view by device kinds is required.

For the plural terminals simultaneous access method, a mechanism for solving collision in the local home network, namely, a local home network collision solving mechanism for simultaneous access of the plural remote terminals is included.

The remote access service unit includes a home network collision solving mechanism performed in a home network level, a device level, an operation level or performed in mixing a device level with an operation level. The home network collision solving mechanism performed in the operation level solves a collision problem according to a user priority rank, a remote access contact order and an operation order.

The home network collision solving mechanism is stored in the device access database in the profile database.

Other objects, characteristics and advantageous of the present invention will become clear through detailed descriptions with reference to accompanying drawings.

### BRIEF DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is an exemplary view illustrating a structure of a UPnP protocol;
Figure 2 is a state diagram illustrating a discovery step for discovering existence of a device by CPs (control point) in a UPnP network;
Figure 3 is a block diagram illustrating a remote control system of a home network in accordance with the present invention;
Figure 4 is a block diagram illustrating a remote access server in accordance with the present invention;
Figure 5 is a flow chart illustrating UPnP conversion processes using a single clock point;
Figure 6 is an exemplary view illustrating a device access database in accordance with the present invention; and
Figure 7 is a detailed block diagram illustrating the remote access server in Figure 4.

### DETAILED DESCRIPTION OF THE INVENTION

Hereinafter, the preferred embodiments a remote control system of a home network in accordance with the present invention will be described with reference to accompanying drawings.

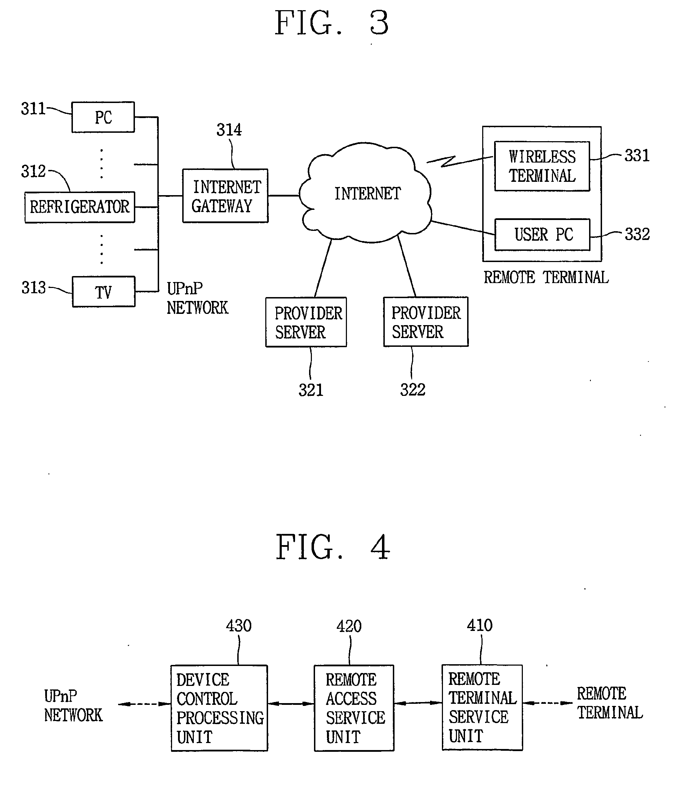

Figure 3 is a block diagram illustrating a remote control system of a home network in accordance with the present invention.

As depicted in Figure 3, the remote control system of the home network in accordance with the present invention includes a home network part in which a PC 311, a refrigerator 312, a TV 313 and an Internet gateway 314 are connected to a UPnP network; a provider network part in which provider servers 321, 322 are connected to the Internet; and a remote terminal part having a radio terminal 331 and a user PC 332.

A remote access server exists in the PC 311 or the Internet gateway 314 on the home network, and the remote access server transmits a state of the plural network devices to a user in a remote place by controlling the plural network devices by receiving a user command.

In the remote control system of the home network in accordance with the present invention, the provider servers 321, 322 have no function or very minute function.

Because remote server contact and web document service are performed in the remote access server in a house, the remote access server is requested by the outside only to notify the outside of a DNS (domain name server) or an IP address thereof.

In a fixed IP or a static DNS mode, it is possible to construct the remote access server as static configuration, and provider's function is unnecessary.

On the other hand, in a variable IP or a dynamic DNS, provider's function is necessary. However, it is very minute in comparison with the conventional provider-based remote access service.

Accordingly, in the remote control system of the UPnP home network in accordance with the present invention, by using plural remote terminals supporting web browsing according to the UPnP device architecture version 1.0 standard, operation of the remote access server efficiently performable various remote access services of the home network will be described.

First, the remote access server presented by the remote control system of the home network in accordance with the present invention includes the web server and has functions for processing all remote services from user log-in to user log-out. In that case, as described above, the remote access server receives help of the provider only in a problem related to an IP pr a DNS address.

The remote access service can be divided into a control flow and a notification flow. Herein, the control flow means a flow for transmitting a web request of the user to a device control processing unit and responding to the web request.

In the meantime, the notification flow means a flow for converting a discovery message or an event message discovered in the UPnP device into a notification request and reflecting it on the web document.

In the present invention, it is assumed the remote terminal has only web browsing function, notification contents by the remote terminal is reflected in web documents, web documents are updated periodically by the web browser having automatic updating function or the user checks new web documents by himself/herself.

If it is possible to support the system by the remote terminal, a method for notifying the remote terminal of a UPnP device message asynchronously through an e-mail, etc. can be used.

Figure 4 is a block diagram illustrating a remote access server in accordance with the present invention. As depicted in Figure 4, the remote access server includes a device control processing unit 430; a remote access server unit 420; and a remote terminal service unit 410.

It is assumed the remote access server is loaded in the Internet gateway 314 in Figure 3.

The device control processing unit 430 mutually communicates with the remote access service unit 420 by an API (application program interface) or other interface methods while mutually operating with home network devices, namely, the PC 311, the refrigerator 312 and the TV 313 in Figure 3 by using UPnP protocol messages. Herein, the core of the device control processing unit 430 is the UPnP CP

In the present invention, it is possible to have each UPnP CP by the same kind of devices, to allocate each UPnP CP to each remote terminal in service and to have only one UPnP CP.

In general, a specific CP can control only one (specific) kind of devices, a common CP can control all UPnP devices, however functions thereof is limited.

In case of having each UPnP CP by the same kind of devices, each CP controls devices of that kind, construction of each CP can be more simplified in comparison with the rest two cases.

In that case, it is required to perform distributing requests from the remote terminal according to kinds of devices and returning back information transmitted from the UPnP device to the remote terminal connected to each device.

In the meantime, when a CP is allocated to each remote terminal, it is easy to link the remote terminal with the device, however all devices to be controlled by each remote terminal have to have a CP function.

Lastly, when there is only one CP, it is required to make the CP have a function capable of controlling all kinds of devices and relay a device with a remote terminal. However, in providing of a service to plural remote terminals, it is possible to reduce the number of UPnP message exchanges by using a service for other terminals.

In case of using a heavy CP controllable plural devices, flexible configuration of a CP using Internet download, etc. is assumed.

When a single CP is allocated to the device control processing unit 430, requests from plural remote terminals can be efficiently satisfied. In more detail, when two users ask for a similar kind of requests, those requests are unified, and it is mutually operated with a pertinent device.

For example, when a user 1 subscribes for an event of a state variable A of a device 1 from one o'clock to two o'clock and a user 2 subscribes for an event of a state variable A of a device 1 from one thirty ∼ to three o'clock, the device control processing unit 430 performs the service for the user 2 by using the event for the user 1 for fir thirty minutes, then, the device control processing unit 430 performs the pertinent service for the user 2 through event subscription for the rest one hour.

Accordingly, when the single device control processing unit is used, it is possible to save traffic of the home network and avoid problems cased by multiple CPs.

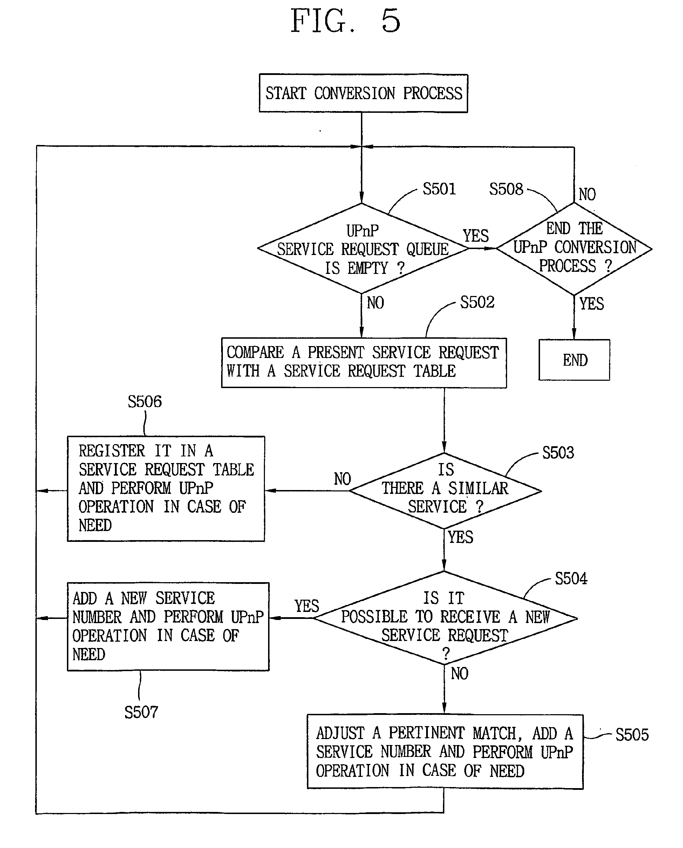

When the device control processing unit 430 includes a single CP, UPnP conversion is performed by steps shown in Figure 5.

Figure 5 is a flow chart illustrating UPnP conversion processes for the single device control processing unit.

Herein, it is assumed requests from the remote access service unit 420 is orderly stored and processed in a UPnP service request queue. In addition, it is assumed there is a certain service request table in which a present proceeding service request is stored, and a service number item is included in the service request table.

First, it is judged whether there is a service request (the UPnP service request queue is empty as shown at step S501, in the judging result, when the UPnP service request queue is not empty, the present service request is compared with the service request table as shown at step S502.

Afterward, it is judged whether there is a newly requested service in the service request table. In more detail, it is judged whether the existing service request accepts the newly requested service as shown at step S503. In the judging result, when the newly requested service is not in the service request table, the newly requested service is recorded in the request table, in case of need, the device control processing unit 430 transmits an appropriate UPnP message as shown at step S506.

On the other hand, in the judging result, when there is a service similar to the newly requested service in the service request table, it is judged whether the existing service request accepts the newly requested service completely as shown at step S504. In the judgement result, when the existing service request can accept the newly requested service request completely, the newly requested service is added to the existing service request table (a new service number is added to the service request table), in case of need, the device control processing unit 430 transmits an appropriate UPnP message as shown at step S507.

On the other hand, in the judging result, when the existing service request can not accept the newly requested service completely, the service request in the service request table is adjusted in consideration of parts not accepted in the existing service request, and the device control processing unit 430 transmits an appropriate UPnP message in case of need as shown at step S505.

In the meantime, in the judging result in the step S501, when the UPnP service request queue is empty, it is judged whether the UPnP conversion process is finished as shown at step S508, and it is determined to finish the UPnP conversion process or start the UPnP conversion process again according to the judging result.

Afterward, the above-described UPnP conversion process is performed repeatedly.

Herein, each CP of the device control processing unit 430 includes a home network view. Form of the home network view can be implemented variously. Generally, it consists of a device list controlled by the UPnP CP and a subscribed event list, etc. same as a state of each device. In addition, when a CP is constructed as single or by device kinds, the home network view can be efficiently used in providing of a service to another remote terminal by using a service request of one remote terminal.

As described above, the UPnP passes steps such as addressing, discovering, describing, control, event and presentation. Herein, message exchange is included in each step, messages can be largely divided into a command from the CP and a notification from the device.

The command from the CP includes a multicast-search HTTPMU (HTTP multicast over UDP) in the discovering step, a HTTP GET message in the describing step, an action and query variable SOAP (simple object access protocol) message in the control step, a subscription GENA (generic event notification architecture) format message in the event step and a HTTP GET message in the presentation step.

The notification from the device includes an advertisement response unicast message in the discovering step and an event GENA format message in the event step. And, the addressing step is a pre-step for starting UPnP, and messages exchanged in the addressing step are not UPnP messages.

UPnP conversion is performed in the device control processing unit 430, and conversion form is different according to services.

Ultimately, the UPnP conversion is for solving difference between the home network view of the device control processing unit and the service view of the remote access service unit 420. For example, a web request occurs by one click of the user in the web page, and it is converted into a service request.

However, when useful information already exist in the home network view by a service request of another remote terminal, UPnP operation does not occur.

In case of need, the device control processing unit 430 updates the home network view by comparing discovery or event from the UPnP device with the present home network view and transmits a notification request to the remote access service unit 420.

The remote access service unit 420 receives the user's web request from the remote terminal service unit 410, transmits the request to the device control processing unit 430 after converting the request into a service request format appropriate to the device control processing unit 430, receives information about a state of the UPnP device from the device control processing unit 430 and transmits the information to the remote terminal service unit 410 to transmit it to the remote terminal.

The user's web request is converted into a service request such as remote access service start, device operation, device state grasp, device event subscription and remote access service end according to contents. In addition, the remote access service unit 420 receives a notification request from the device control processing unit 430 and updates a service view thereof in case of need.

Each remote service managed by the remote access service unit 420 has each service view. In addition, the service view shows the home network on the user's remote terminal, and it consists of web documents of the home network to be controlled by the user such as a device state, a control page, a device list page and a user option page, etc.

The remote access service unit 420 varies a service view according to variation of the home network view, result of the user control command and user's option change, etc., and the service is implemented as a form of active web page generation. For that, the remote access service unit 420 includes a document generator for making contents to be transmitted to the user as web documents such as XML.

The remote access service unit 420 stores and maintains service profile database having categories such as user, terminal type, Internet connection type, etc.

The profile database has static configuration or it can be updated by using an option page of the service view after the user is connected to the remote access service. In addition, the profile database includes information such as preferred device list of the user, request event list, performance of the remote access terminal such as a screen size and an input device kind, bandwidth and providing service of the user network and user access priority by UPnP devices. The service view and the UPnP conversion form are continually influenced by the information while the service is proceeded.

Whenever the remote terminal requests a service, the remote access service unit 420 can allocate one service module and can include one integrated service module. Under all circumstances, device access database for supporting simultaneous access of plural users has to be existed in the profile database.

The device access database includes data such as each user's priority rank or access probability, etc. according to share (collision) level by users, devices or device's operations.

In addition, a form of the device access database is determined according to a device access policy by specific implement.

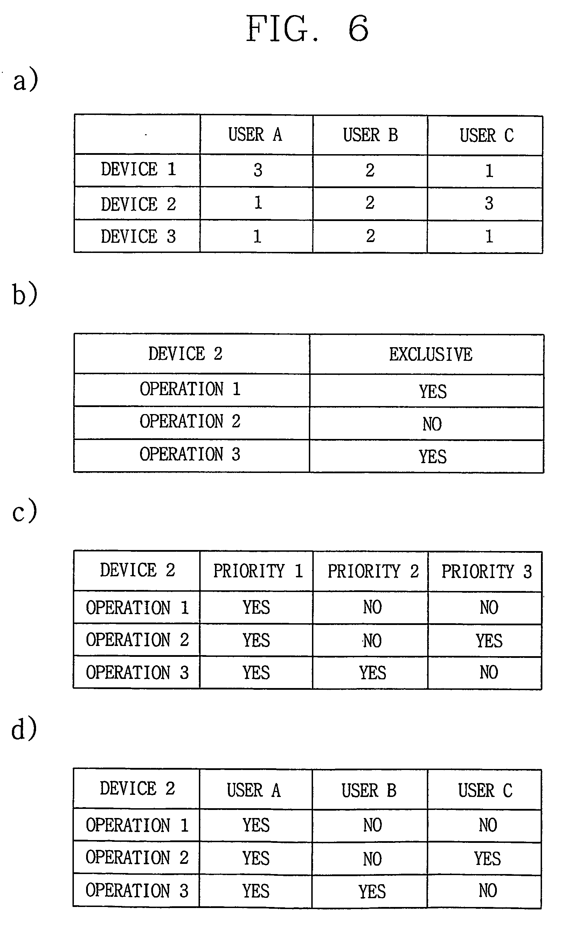

The device access database according to the device access policy will be described in more detail with reference to accompanying Figure 6.

Figure 6 is an exemplary view illustrating the device access database used in the remote access server, Figure 6(a) is an exemplary view illustrating the device access priority list table according to the above-mentioned device access policy, Figure 6(b) is an exemplary view illustrating a share type table by device's operations according to the above-mentioned device access policy, Figure 6(c) is an exemplary view illustrating authority by priority lists, and Figure 6(d) is an exemplary view illustrating authority by users about operations supported by the device.

First, device simultaneous access policy consists of following rules.
1. There is a priority list by users.
2. It is displayed whether the device is exclusive at every operation.
3. When collision occurs at an operation of the exclusive device, the collision is solved according to the user priority rank.
4. In case of the same priority rank, priority is given to a user starting operation first.
5. Although the priority of a new user is higher, an existing operation can not be stopped while the operation is performed.

The device access priority rank list in Figure 6(a) records a priority list by users about all devices in the home network.

As shown in Figure 6(a), in the device access priority rank list, a priority rank of the device 1 is allocated to users in order of a user C, a user B and a user A. In more detail, when the user A collides with the user C in the device 1, the user C has priority.

As shown in Figure 6(b), a share type table by device's operations shows share types of the device 2. Herein, operations 1 and 3 indicate access of other users is impossible while a pertinent operation is performed.

Figure 6(c) is an exemplary view showing access authority by priority ranks about operations of each device, when a priority rank is 1, authority is given to all operations, when a priority rank is 2, authority is given only to an operation 3, when a priority rank is 3, authority is given only to an operation 2.

In the meantime, as described above, there is a method for providing authority by users regardless of priority rank.

Figure 6(d) is an exemplary view showing authority by users about device's operations, as shown in Figure 6(d), the device 2 provides authority about each operation by users.

Examples in Figure 6 show simultaneous access in the device operation level, herein, it is also possible to perform simultaneous access control in the device unit or the home network unit. In addition, it is also possible to perform simultaneous access control by compromising the device unit and the operation unit. For example, it is possible to perform access control to the device 1 in the device level and perform access control to the device 3 in the operation level. In more detail, when collision occurs, the collision can be solved by using methods such as a method for considering a user having higher priority, a method for considering a user starting the remote access service first and a method for considering a user starting a specific operation of a specific device first, etc.

Of course, there can be other collision solving methods for mixing priority, remote service access order and operation order. Herein, a collision solving method according to priority rank is performed between users having different priority ranks, and a collision solving method for considering a user starting operation first is performed between users having the same priority rank.

Policy for collision solving mechanism can have various forms and complexities according to share units and collision solving methods.

In Figure 4, the remote terminal service unit 410 communicates with the remote terminal as a web request/response mode, in a control flow, it transmits a user's request to the remote access service unit 420 and transmits web documents from the service unit 420 to the user as web responseing mode.

In a notification flow, the remote terminal service is corresponded to web browser automatic update or user confirmation by providing a new web document to the user.

The remote terminal service unit 410 includes a built-in web server and a space for storing web documents. In the web document storing space, a style document for various remote terminals can be stored by being synchronized with the profile database of the remote access server. For example, in use of XML, a XSL stylesheet is stored in the web document storing space, and the XSL stylesheet can be applied to the remote terminal before transmitting the XML document to the remote terminal.

The event from the UPnP device can be transmitted to the user as e-mail, SMS and voice telephone, for that, the remote terminal service unit 410 has to include pertinent modules.

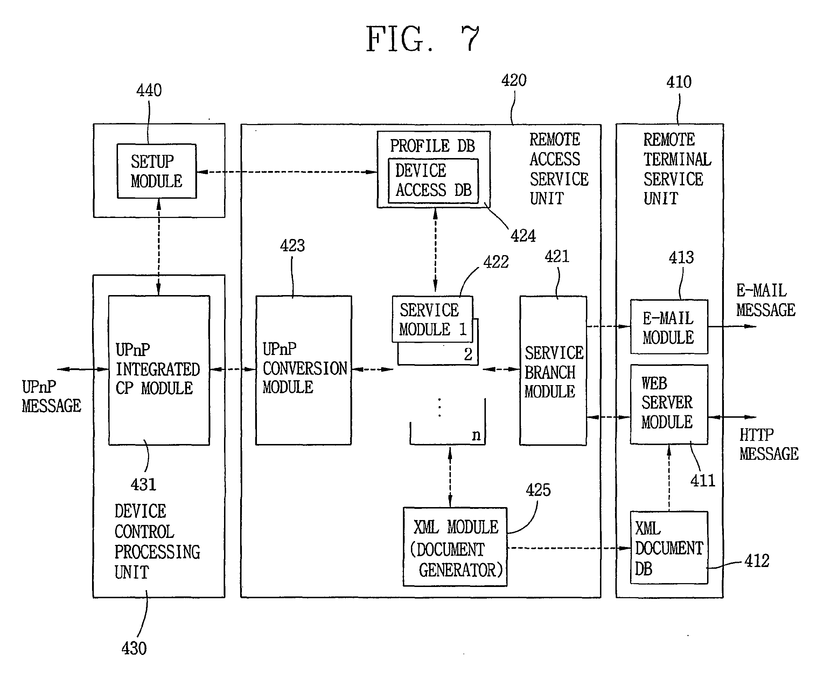

Figure 7 is a detailed block diagram of the remote access server, as depicted in Figure 7, the remote access server consists of the remote terminal service unit 410; the remote access service unit 420; the device control processing unit 430; and the setup module 440 for static configuration and setup.

Herein, the device control processing unit 430 includes the UPnP integrated CP module 431. In addition, the remote access service unit 420 includes the service branch module 421; the service module 422; the UPnP conversion module 423; the profile database 424 and the XML module 425 as the character generator.

The remote terminal service unit 410 includes the web server module 411, the XML document DB 412 and the e-mail module 413.

In order to control all kinds of devices of the device control processing unit 430, the setup module 440 has functions such as a download function for configuring the UPnP integrated CP module 431 statically, initializing and updating the profile database 424 of the remote access service unit 420.

The profile database 424 has a device access database.

The remote access service unit 420 generates each service module 422 for each connected remote terminal and provides a remote access service. However, only an integrated CP is shown in the UPnP network as the one and only remote access CP.

The service branch module 421 of the remote access service unit 420 performs generation and collection of the service module 422 according to connection and end request of the user, transmits web requests to a pertinent service module and transmits a notification request arrived from the service module to the e-mail module 413 of the remote-access service unit 410. In more detail, it is assumed the remote terminal having a function for processing asynchronous notification is supported.

In that case, the remote access server is operated as XML basis, it generates required XML documents dynamically in the XML module 425 corresponded to the document generator of the remote access service unit 420 in a general model and services it to the user. In addition, the remote access server performs services easily to various terminals by using the XSL stylesheet according to the device terminal and user taste, etc.

In the meantime, in the embodiment of the present invention, control and check of the home network devices accessing to the home network from a remote place have been described, on the basis of that, more services can be performed as following.
1. When a user stays away from home for a long time, it is possible to manage a specific home network in a remote place. It can be performed easily when the remote access server describes the home network as XML documents.
2. In a method for managing the home network devices by a manufacturing company selling them, selection ranges can be increased. In the convention method, when there is a need to report a device state to a manufacturing company, mainly the device performs a connection request to the home network and notifies it through the Internet connection.
   However, periodically, for example, once in six months, the manufacturing company can access to the device and check a state of the device. In that case, it is assumed the user provides a limited home network access right to the manufacturing company. It means there is no need to implement a manufacturing company report function for the home network device, and accordingly it can be used efficiently for maintaining and managing a low price-light device.
3. There is application possibility to apply it to web services. When representation of the home network is performed as XML (as one of web service standards), it is possible to construct a service providable to the outside, and other application possibility is very high.

### INDUSTRIAL APPLICABILITY

As described-above in detail, in the present invention, by making a light remote terminal having various kinds of web browsing functions access to the UPnP home network in a remote place, there are following advantages.

First, in the present invention, it is possible to provide a custom-tailed service according to a kind of a remote terminal, user preference and network environment.

In addition, in the present invention, when plural terminals access to the home network simultaneously, it is possible to process it efficiently and solve collision occurable in the home network devices.

In addition, in the present invention, because only web browsing function is required for the remote terminal and there is little requirement, supply is very easy.

## Claims

1. A remote control system of a home network, the system comprising:
- a local home network in which a plurality of devices (311, 312, 313) are connected;
- at least one remote terminal (331, 332) for controlling the local network in a remote place by means of at least one user request sent from the at least one remote terminal (331, 332); and
- a remote access server (410, 420, 430) for controlling the plurality of devices (311, 312, 313) in accordance with the at least one user request sent from the at least one remote terminal (331, 332), said remote access server (410, 420, 430) comprising a remote access service unit (420) for converting the at least one user request sent from the at least one remote terminal (331, 332) into a service request, and a device control processing unit (430) for converting the service request into an UPnP protocol message for controlling the plurality of devices (311, 312, 313) according to the service request,
**characterized in that**
the remote access server (410, 420, 430) further comprises an UPnP service request queue for orderly storing requests from the remote access serving unit (420) and a service request table in which a present proceeding service request is stored, wherein the device control processing unit (430) is adapted to judge whether a newly request service is acceptable by comparing the newly requested service with the service requests stored in the service request table and to perform an UPnP conversion operation of the newly requested service into an UPnP protocol message depending from the result of the judgement.

2. The system of claim 1, wherein the device control processing unit (430) is further adapted to judge whether an existing service request stored in the service request table accepts the newly requested service, and wherein the UPnP conversion operation is performed depending from the judging result.

3. The system of claim 1 or 2, wherein the remote access service unit (420) is adapted to transmit a web request for a pertinent remote terminal (331, 332) to a remote terminal service unit (410) provided in the remote access server (410, 420, 430) by having a service view consisting of a set of at least one web document.

4. The system of claim 3, wherein the service view consists of a set of at least one web document connected with each other such as a state of the plurality of devices (311, 312, 313) and control page, a device list page and a user option page.

5. The system of claim 3 or 4, wherein the remote access service unit (420) includes a profile database, and wherein the remote access service unit (420) is adapted to determine a service view of a remote access service according to service related information recorded in a profile database and to provide various remote access services to a user and a remote terminal (331, 332) with reference to the service view.

6. The system of claim 5, wherein the profile database includes information such as user's preferred device list, request event list, performance of the remote access terminal such as a screen size and a kind of an input device, provider network bandwidth and providable service, user access priority list by devices.

7. The system of at least one of the preceding claims, wherein the remote access service unit (420) includes a home network collision solving mechanism performed in a home network level, a device level, an operation level or performed in mixing a device level with an operation level.

8. The system of claim 7, wherein the home network collision solving mechanism performed in the operation level is adapted to solve a collision problem according to a user priority rank, a remote access contact order and an operation order.

9. The system of claim 7 or 8, wherein the home network collision solving mechanism is stored in a device access database in a profile database.

10. The system of claim 9, wherein the device access database includes a device access priority table recording priority per users about all devices in the home network.

11. The system of claim 9, wherein the device access database includes a sharing type table by device's operations indicating access possibility from other users in performing of a specific operation supported by a device.

12. The system of claim 9, 10 or 11, wherein the device access database is adapted to record an access authority table by priorities about operations supported by each device.

13. The system of claim 9, wherein the device access database is adapted to record an access authority table by users about operations supported by each device.

14. The system of claim 1, wherein the remote access server (410, 420, 430) further comprises a remote terminal service unit (410) for performing mutual communication as web request/response with a remote terminal by having a built-in web server, the remote terminal service unit (410) being adapted to transmit a web request from one remote terminal (331, 332) to the remote access service unit (420) and to transmit a web response as a web document form generated with reference to a recent service view from the remote access service unit (420) to the remote terminal (331, 332).

15. The system of at least one of the preceding claims, further comprising:
- a setup module for initializing the device control processing unit (430) and a profile database of the remote access service unit (420); an
- a communication module having asynchronous notification functions such as e-mail, voice telephone and SMS, etc.

16. The system of at least one of the preceding claims, wherein the remote access server (410, 420, 430) is adapted to have a function as a local CP (control point) and to transmit and/or receive request/answer to/from the remote terminal.

17. The system of at least one of the preceding claims, wherein the remote access server (410, 420, 430) is included in a local home network or an Internet provider server.

18. The system of at least one of the preceding claims, wherein the remote access server (410, 420, 430) is adapted to acquire state information of plural devices (311, 312, 313) connected to the local home network with reference to a device list to be controlled, a subscribed event list and a service request list, and wherein the remote access server (410, 420, 430) is adapted to control the plural devices (311, 312, 313) by processing request/response with the remote terminal (331, 332).

## Patentansprüche

1. Fernsteuerungssystem eines Hausnetzes, welches beinhaltet:
- ein lokales Hausnetz, an welches eine Mehrzahl von Geräten (311, 312, 313) angeschlossen ist;
- mindestens ein abgesetztes Datenendgerät (331, 332) zur Steuerung des lokalen Netzwerks an einem entfernten Ort mittels mindestens einer Nutzeranfrage, welche von dem mindestens einen abgesetzten Datenendgerät (331, 332) gesendet wird; und
- einen Fernzugriffs-Server (410, 420, 430) zur Steuerung der Mehrzahl von Geräten (311, 312, 313) in Übereinstimmung mit der mindestens einen Nutzeranfrage, welche von dem mindestens einen abgesetzten Datenendgerät (331, 332) gesendet wurde, wobei genannter Fernzugriffs-Server (410, 420, 430) eine Fernzugriffsdiensteinheit (420) umfasst, welche die mindestens eine Nutzeranfrage, die von dem mindestens einen abgesetzten Datenendgerät (331, 332) gesendet wurde, in eine Dienstanfrage umsetzt, und eine Gerätesteuerungsprozesseinheit (430) zur Umsetzung der Dienstanfrage in eine UPnP-Protokoll-Nachricht zur Steuerung der Mehrzahl an Geräten (311, 312, 313) gemäß der Dienstanfrage,
**dadurch gekennzeichnet, dass**
der Fernzugriffs-Server (410, 420, 430) weiterhin
eineUPnP-Dienstanfrage-Warteschlange beinhaltet, um Anfragen von der Fernzugriffsdiensteinheit (420) geordnet zu speichern und
eine Dienstanfragetabelle, in welcher eine gegenwärtig fortschreitende Dienstanfrage gespeichert ist,
wobei die Gerätesteuerungsprozesseinheit (430) geeignet ist, zu bewerten, ob ein neu angeforderter Dienst zulässig ist, indem sie den neu angeforderten Dienst mit der Dienstanfrage vergleicht, welche in der Dienstanfragetabelle gespeichert ist, und in Abhängigkeit von dem Ergebnis der Bewertung eine UPnP-Umwandlungs-Operation des neu angeforderten Dienstes in eine UPnP-Protokoll-Nachricht durchzuführen.

2. System nach Anspruch 1, wobei die Gerätesteuerungsprozesseinheit (430) weiterhin geeignet ist zu bewerten, ob eine vorhandene Dienstanfrage, welche in der Dienstanfragetabelle gespeichert ist, den neu angefragten Dienst akzeptiert und wobei in Abhängigkeit von dem Bewertungsergebnis eine UPnP-Umwandlungs-Operation durchgeführt wird.

3. System nach Anspruch 1 oder 2, wobei die Fernzugriffsdiensteinheit (420) geeignet ist, eine Web-Anfrage für ein entsprechendes abgesetztes Datenendgerät (331, 332) zu einer Diensteinheit für abgesetzte Datenendgeräte (410) weiterzuleiten, welche in dem Fernzugriffs-Server (410, 420, 430) bereitgestellt ist, indem sie eine Diensteansicht aufweist, welche aus einem Satz von mindestens einem Web-Dokument besteht.

4. System nach Anspruch 3, wobei die Diensteansicht aus einem Satz von mindestens einem Web-Dokument besteht, welche miteinander verbunden sind, wie z.B. ein Status der Mehrzahl der Geräte (311, 312, 313) und eine Seite zur Steuerung, eine Seite mit einer Liste der Geräte und eine Seite mit den Auswahlmöglichkeiten des Nutzers.

5. System nach Anspruch 3 oder 4, wobei die Fernzugriffsdiensteinheit (420) eine Profil-Datenbank beinhaltet und wobei die Fernzugriffsdiensteinheit (420) dazu geeignet ist, eine Diensteansicht eines Fernzugriffsdienstes gemäß der diensterelevanten Daten zu bestimmen, welche in der Profil-Datenbank aufgezeichnet sind, und verschiedene Fernzugriffsdienste einem Nutzer und einem Datenendgerät (331, 332) mit Bezug auf die Diensteansicht zu bieten.

6. System nach Anspruch 5, wobei die Profil-Datenbank Informationen beinhaltet, wie z.B. die Liste der bevorzugten Geräte eines Nutzers, eine Liste der Anfrage-Ereignisse, die Leistungsfähigkeit des abgesetzten Datenendgerätes, wie z.B. Bildschirmgröße und Art der Eingabevorrichtung, Bandbreite und Diensteangebot des Netzwerkanbieters und Zugangsprioritätsliste der Nutzer je Gerät.

7. System nach mindestens einem der vorhergehenden Ansprüche, wobei die Fernzugriffsdiensteinheit (420) einen Mechanismus zur Behebung von Kollisionen im Hausnetz beinhaltet, welcher auf einer Ebene des Hausnetzes, einer Geräteebene, einer Betriebsebene ausgeführt wird oder durch eine Vermischung einer Geräte- mit einer Betriebsebene ausgeführt wird.

8. System nach Anspruch 7, wobei der Mechanismus zur Behebung von Kollisionen im Hausnetz, welcher in der Betriebsebene ausgeführt wird, dazu geeignet ist, ein Kollisionsproblem gemäß einem Nutzerprioritätsrang, einem Fernzugriffskontaktbefehl und einem betrieblichen Befehl zu lösen.

9. System nach Anspruch 7 oder 8, wobei der Mechanismus zur Behebung von Kollisionen im Hausnetz in einer Gerätezugriffsdatenbank in einer Profil-Datenbank gespeichert ist.

10. System nach Anspruch 9, wobei die Gerätezugriffsdatenbank eine Gerätezugriffsprioritätstabelle beinhaltet, welche die Priorität je Nutzer über alle Geräte im Hausnetz aufzeichnet.

11. System nach Anspruch 9, wobei die Gerätezugriffsdatenbank eine Art Mitnutzungstabelle nach Funktionen des Gerätes beinhaltet, welche Zugriffsmöglichkeiten anderer Nutzer auf die Ausführung einer bestimmten Funktion anzeigt, welche ein Gerät unterstützt.

12. System nach Anspruch 9, 10, oder 11, wobei die Gerätezugriffsdatenbank dazu geeignet ist, eine Zugriffsberechtigungstabelle nach Prioritäten über Funktionen aufzuzeichnen, welche jedes Gerät unterstützt.

13. System nach Anspruch 9, wobei die Gerätezugriffsdatenbank dazu geeignet ist, eine Zugriffsberechtigungstabelle nach Nutzer über Funktionen aufzuzeichnen, welche jedes Gerät unterstützt.

14. System nach Anspruch 1, wobei der Fernzugriffs-Server (410, 420, 430) weiterhin eine Diensteinheit für abgesetzte Datenendgeräte (410) beinhaltet, um wechselseitige Kommunikation als Web-Anfrage/Antwort mit einem abgesetzten Datenendgerät durchzuführen, indem sie einen integrierten Web-Server aufweist, wobei die Diensteinheit für abgesetzte Datenendgeräte (410) dazu geeignet ist, eine Web-Anfrage eines abgesetzten Datenendgerätes (331, 332) zu der Fernzugriffsdiensteinheit (420) weiterzuleiten und eine Web-Antwort als Web-Dokumentformular, welches mit Bezug auf die letzte Diensteansicht von der Fernzugriffsdiensteinheit (420) erzeugt wird, an das abgesetzte Datenendgerät (331, 332) weiterzuleiten.

15. System nach mindestens einem der vorangehenden Ansprüche, welches weiterhin beinhaltet:
- ein Einrichtmodul, um die Gerätesteuerungsprozesseinheit (430) zu initialisieren und eine Profil-Datenbank der Fernzugriffsdiensteinheit (420); und
- ein Kommunikationsmodul, welches asynchrone Benachrichtigungsfunktionen, wie z.B. e-Mail, Sprachtelefonie und SMS etc. aufweist.

16. System nach mindestens einem der vorangehenden Ansprüche, wobei der Fernzugriffs-Server (410, 420, 430) dazu geeignet ist, die Funktion als lokaler Kontrollpunkt (CP) zu haben und Anfragen/Antworten von/zu dem abgesetzten Datenendgerät zu empfangen und/oder zu senden.

17. System nach mindestens einem der vorangehenden Ansprüche, wobei der Fernzugriffs-Server (410, 420, 430) in einem Hausnetz- oder Internetprovider-Server beinhaltet ist.

18. System nach mindestens einem der vorangehenden Ansprüche, wobei der Fernzugriffs-Server (410, 420, 430) dazu geeignet ist, Statusinformationen einer Mehrzahl von Geräten (311, 312, 313), welche an einem lokalen Hausnetz angeschlossen sind, zu erlangen mit Bezug auf eine Liste der zu steuernden Geräte, eine Liste der subskribierten Ereignisse und einer Liste der Diensteanfragen, und wobei der Fernzugriffs-Server (410, 420, 430) dazu geeignet ist, die Mehrzahl von Geräten (311, 312, 313) mittels Verarbeitung von Anfagen/Antworten mit dem abgesetzten Datenendgerät (331, 332) zu steuern.

## Revendications

1. Système de commande à distance d'un réseau domestique, le système comprenant :
- un réseau domestique local, dans lequel une pluralité d'appareils (311, 312, 313) sont connectés ;
- au moins un terminal à distance (331, 332), pour commander le réseau local depuis un endroit à distance, au moyen d'au moins une requête d'usager provenant du au moins un terminal à distance (331, 332) ; et
- un serveur d'accès à distance (410, 420, 430), pour commander la pluralité d'appareils (311, 312, 313) en fonction de la au moins une requête d'usager provenant du au moins un terminal à distance (331, 332), ledit serveur d'accès à distance (410, 420, 430) comprenant une unité de service d'accès à distance (420) pour convertir la au moins une requête d'usager provenant du au moins un terminal à distance (331, 332) en requête de service, et une unité de traitement de commande d'appareil (430) pour convertir la requête de service en un message de protocole UPnP afin de commander la pluralité d'appareils (311, 312, 313) en fonction de la requête de service,
**caractérisé en ce que**
le serveur d'accès à distance (410, 420, 430) comprend en outre une file d'attente de requêtes de service UPnP pour l'enregistrement cohérent de requêtes provenant de l'unité de service d'accès à distance (420) et une table de requêtes de service dans laquelle une requête de service couramment en instance est enregistrée, l'unité de traitement de commande d'appareil (430) étant apte à déterminer si une nouvelle requête de service est acceptable, en comparant la nouvelle requête de service avec les requêtes de service enregistrées dans la table de requêtes de service, et à accomplir une opération de conversion UPnP de la nouvelle requête de service en un message de protocole UPnP en fonction du résultat de la détermination.

2. Système selon la revendication 1, dans lequel l'unité de traitement de commande d'appareil (430) est en outre apte à déterminer si une requête de service existante, qui est enregistrée dans la table de requêtes de service, accepte la nouvelle requête de service, et dans lequel l'opération de conversion UPnP est accomplie en fonction du résultat de la détermination.

3. Système selon la revendication 1 ou 2, dans lequel l'unité de service d'accès à distance (420) est apte à émettre une requête Internet pour un terminal à distance pertinent (331, 332) à destination d'une unité de service de terminal à distance (410), qui est fournie dans le serveur d'accès à distance (410, 420, 430), en possédant une visualisation de service comprenant un ensemble d'au moins un document Internet.

4. Système selon la revendication 3, dans lequel la visualisation de service comprend un ensemble d'au moins un document Internet, qui sont connectés l'un avec l'autre comme une page de commande et d'état de la pluralité d'appareils (311, 312, 313), une page listant les appareils et une page d'options pour usager.

5. Système selon la revendication 3 ou 4, dans lequel l'unité de service d'accès à distance (420) comprend une base de données de profil, et dans lequel l'unité de service d'accès à distance (420) est apte à déterminer une visualisation de service d'un service d'accès à distance, en fonction d'informations en rapport avec le service qui sont enregistrées dans une base de données de profil, et à fournir divers services d'accès à distance à un usager ainsi qu'à un terminal à distance (331, 332) en rapport avec la visualisation de service.

6. Système selon la revendication 5, dans lequel la base de données de profil comprend des informations telles qu'une liste d'appareils préférés de l'usager, une liste d'instances de requêtes, des caractéristiques du terminal d'accès à distance telles que la taille d'écran et le type de dispositif de saisie, une largeur de bande du réseau du fournisseur d'accès et un service disponible, une liste de priorité d'accès d'usager par types d'appareil.

7. Système selon l'une des revendications précédentes, dans lequel l'unité de service d'accès à distance (420) possède un mécanisme de résolution de collision de réseau domestique, qui est accompli au niveau d'un réseau domestique, au niveau d'un appareil, au niveau d'une opération, ou qui est accompli en mélangeant un niveau d'appareil avec un niveau d'opération.

8. Système selon la revendication 7, dans lequel le mécanisme de résolution de collision de réseau domestique qui est accompli au niveau d'une opération est apte à résoudre un problème de collision en fonction d'un rang de priorité d'usager, d'un ordre de contact d'accès à distance et d'un ordre d'opération.

9. Système selon la revendication 7 ou 8, dans lequel le mécanisme de résolution de collision de réseau domestique est enregistré dans une base de données d'accès d'appareil, dans une base de données de profil.

10. Système selon la revendication 9, dans lequel la base de données d'accès d'appareil inclut une table de priorité d'accès d'appareil, qui enregistre la priorité par usager pour tous les appareils dans le réseau domestique.

11. Système selon la revendication 9, dans lequel la base de données d'accès d'appareil inclut une table de type de partage par opération d'appareil, qui indique la possibilité d'accès par d'autres usagers pour l'accomplissement d'une opération spécifique qui est gérée par un appareil.

12. Système selon la revendication 9, 10 ou 11, dans lequel la base de données d'accès d'appareil est apte à enregistrer une table d'autorité d'accès par types de priorité, au sujet d'opérations qui sont gérées par chaque appareil.

13. Système selon la revendication 9, dans lequel la base de données d'accès d'appareil est apte à enregistrer une table d'autorité d'accès par usager, au sujet d'opérations qui sont gérées par chaque appareil.

14. Système selon la revendication 1, dans lequel le serveur d'accès à distance (410, 420, 430) comprend en outre une unité de service de terminal à distance (410) pour accomplir une communication mutuelle en termes de requête/réponse Internet avec un terminal à distance en possédant un serveur Internet intégré, l'unité de service de terminal à distance (410) étant apte à émettre une requête Internet depuis un terminal à distance (331, 332) jusqu'à l'unité de service d'accès à distance (420), et à émettre une réponse Internet sous forme de document Internet produit en rapport avec une visualisation de service récente depuis l'unité de service d'accès à distance (420) jusqu'au terminal à distance (331, 332).

15. Système selon l'une au moins des revendications précédentes, comprenant en outre :
un module de préparation pour initialiser l'unité de traitement de commande d'appareil (430) et une base de données de profil de l'unité de service d'accès à distance (420) ; et
un module de communication possédant des fonctions de notification asynchrones, telles que le courriel, le téléphone vocal et le service de transmission de messages courts, etc.

16. Système selon l'une des revendications précédentes, dans lequel le serveur d'accès à distance (410, 420, 430) est apte à posséder une fonction de point de commande (PC) local et à émettre et/ou recevoir des requêtes/réponses à destination/provenant du terminal à distance.

17. Système selon l'une des revendications précédentes, dans lequel le serveur d'accès à distance (410, 420, 430) est inclus dans un réseau domestique local ou dans un serveur de fournisseur d'accès à Internet.

18. Système selon l'une des revendications précédentes, dans lequel le serveur d'accès à distance (410, 420, 430) est apte à acquérir de l'information d'état au sujet de plusieurs appareils (311, 312, 313) qui sont connectés au réseau domestique local, en rapport avec une liste d'appareils à commander, une liste d'évènements abonnés et une liste de requêtes de service, et dans lequel le serveur d'accès à distance (410, 420, 430) est apte à commander la pluralité d'appareils (311, 312, 313) en traitant les requêtes/réponses avec le terminal à distance (331, 332).
